Europäisches Patentamt

(19) European Patent Office

Office européen des brevets

(11) Publication number : **0 436 752 B1**

## EUROPEAN PATENT SPECIFICATION

(45) Date of publication of patent specification :
**31.08.94 Bulletin 94/35**

(51) Int. Cl.[5] : **G01J 3/453**

(21) Application number : **90100310.3**

(22) Date of filing : **08.01.90**

(54) **Optical interference signal extractor.**

(43) Date of publication of application :
**17.07.91 Bulletin 91/29**

(45) Publication of the grant of the patent :
**31.08.94 Bulletin 94/35**

(84) Designated Contracting States :
**DE**

(56) References cited :
**FR-A- 2 621 753
REVIEW OF SCIENTIFIC INSTRUMENTS, vol.
59, no. 2, February 1988, pages 242-248, New
York, US; F. OZANAM et al: "Fourier trans-
form, electromodulated, infrared spectrome-
ter for studies at the electrochemical
interface"
IBM TECHNICAL DISCLOSURE BULLETIN,
vol. 17, no. 7, December 1974, pages
1927-1928, New York, US; F. BUCKLEY, III:
"Automatic gain control system"**

(56) References cited :
**J.E.E. JOURNAL OF ELECTRONIC ENGINEER-
ING, vol. 23, no. 236, August 1986, pages
58-60; N. ARAKAWA: "Optical spectrum
analyzer: New techniques and new functions"
APPLIED OPTICS, vol. 13, no. 4, April 1974,
pages 723-725; R.J. DOUGLAS et al: "Simple
double-beam modification for far infrared in-
terferometers"**

(73) Proprietor : **ADVANTEST CORPORATION
32-1, Asahi-cho 1-chome
Nerima-Ku Tokyo (JP)**

(72) Inventor : **Niki, Shoji
2-171-1, Fukiagemachi Shinjuku,
Kitaadachi-gun
Saitama (JP)**
Inventor : **Pawlik, Jon R.
600 Mountain Avenue
Murry Hill, New Jersey 07974 (US)**

(74) Representative : **Hoffmann, Eckart et al
Patentanwalt,
Blumbach & Partner,
Bahnhofstrasse 103
D-82166 Gräfelfing (DE)**

# Description

## BACKGROUND OF THE INVENTION

The present invention relates to an optical interference signal extractor for use in measuring the spectral distribution of light.

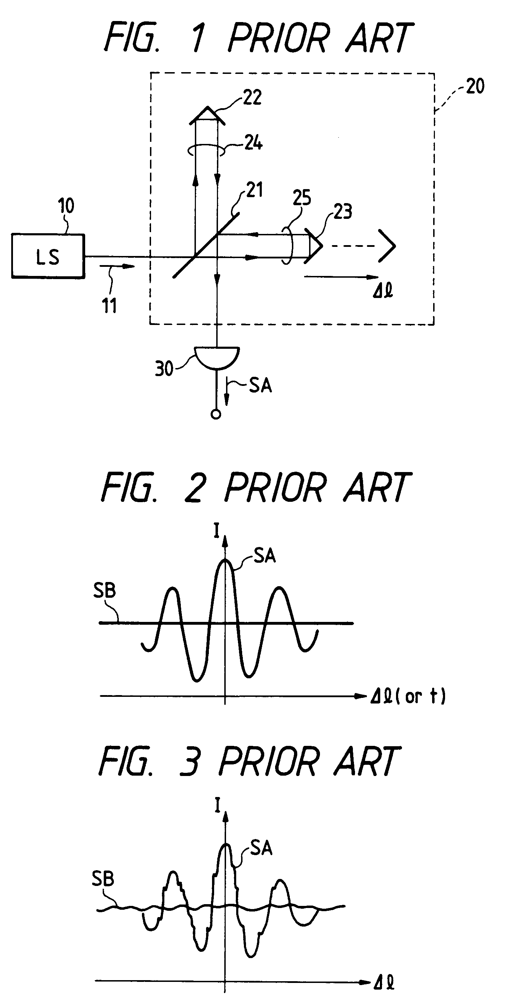

Fig. 1 shows a conventional optical interference signal extractor. Reference numeral 10 indicates a light source for emitting light 11 to be measured and 20 an optical interferometer capable of sweeping an optical path difference, that is, capable of continuously changing an optical path difference. In this example the optical interferometer 20 is shown to be a Michelson interferometer but may also be a Fabry-Perot interferometer.

The Michelson interferometer 20 comprises a half mirror or semitransparent mirror 21 for splitting and combining light, a fixed mirror 22 for forming a fixed optical path 24, and a movable mirror 23 for forming a variable optical path 25.

The light 11 emitted from the light source 10 is split by the half mirror 21 to the fixed optical path 24 and the variable optical path 25, and light from the former and light from the latter are coupled together or combined by the half mirror 21 into a beam of light, which is converted by a photodetector 30 into an electric signal SA.

The light having passed through the fixed optical path 24 and the light having passed through the variable optical path 25 have a phase difference owing to the optical path difference, and hence interfere with each other when they are coupled together by the half mirror 21. The interference of light varies as the movable mirror 23 moves. In other words, the intensity of the interference light from the optical interferometer 20 repeatedly varies corresponding to interference fringes as the movable mirror 23 moves. The intensity variation of the interference light corresponding to the distance of movement $\Delta\ell$ of the movable mirror 23 from the position where the optical path difference is zero is measured by conversion into the level of an electric signal by the photodetector 30, whereby such an optical interference signal SA as shown in Fig. 2 can be obtained. The movement of the movable mirror 23 for the distance $\Delta\ell$ causes an optical path difference of $2\Delta\ell$, but in the following description, the distance of movement $\Delta\ell$ may sometimes be referred to as the optical path difference for the sake of simplicity. By a frequency analysis of the interference signal SA through Fourier transformation, the spectral distribution of the light to be measured 11 can be obtained. Where the moving speed of the movable mirror 23 is made constant, time t corresponding to the distance of its movement may be represented on the abscissa in Fig. 2.

Fig. 2 shows the waveform of the interference signal SA when the optical power of the light to be measured 11 is stable. Where the optical power (indicated by SB in Fig. 2) of the light 11 is stable, an interference signal of a good SN ratio can be obtained. On the other hand, where the optical power SB of the light 11 fluctuates as depicted in Fig. 3, the SN ratio of the interference signal SA becomes poor, and the results of its frequency analysis contain, as spectral, also high-order modulation components resulting from the fluctuation in the optical power of the light 11, making it impossible to accurately measure the wavelength distribution in the light 11.

The optical interference signal extractor shown in Fig. 1 and explained above is disclosed in the document "J.E.E. Journal of Electronic Engineering", Vol. 23, No. 236, August 1986, page 58-60; N. Arakawa. Although not shown in Fig. 1, this prior art further comprises a reference light source for emitting reference light of a narrow spectrum which is applied to said optical interferometer together with the light to be measured. A second photodetector is used for converting reference interference light emitted from the interferometer to an electrical signal, and a multiplier multiplies the frequeny of the output signal of the second photodetector to a desired frequency and applies the latter as a sampling clock to an A-D converter used for converting the output signal from photodetector 30 into a digital signal for further signal processing.

The document "Review of Scientific Instruments", Vol. 59, No. 2, February 1988, pages 242-248, New York, US: F.Ozanam et al, discloses a Fourier transform, electromodulated, infrared spectrometer for studies at the electrochemical interface. This known spectrometer uses a Michelson interferometer and discloses a beam splitter for splitting off a portion of the light incident to the interferometer and directs it to a photodiode in order to obtain a signal representing the power of the light source. This signal is used by a stabilization device driving the light source. In the Michelson interferometer, the optical path length is swept by means of a scanning mirror drive, and the exit beam of the interferometer is focussed on a sample to be investigated. The light beam from the sample is focussed on a photodetector, converting it into an electrical signal. The signal is separated into a DC component and an AC component, these components being processed in resepctive separate channels.

The document FR-A-2 621 753 discloses a transmitter-receiver system designed such as to compensate for any attenuation the transmitted signal is subjected to in the transmission path between the transmitter and the receiver. To that end, on the transmitting side, any uncertain DC component of the signal to be transmitted is removed and a known DC component added instead. The sum of the AC component and the known DC component is transmitted to the receiver. In the receiver, the AC component and the DC component, each attenuated by the same factor in the transmission path, are separated from each other and the AC component is amplified by an amplifier whose gain is controlled by the DC component. Provided the gain of the amplifier is inversely proportional to the DC component, the attenuation factor in the AC component will be removed.

## SUMMARY OF THE INVENTION

It is an object of the present invention to provide an optical interference signal extractor which permits the removal of noise resulting from a variation in the optical power of light to be measured.

This object is achieved with an optical interference signal extractor as claimed.

In the solution according to the present invention, the power signal may be obtained either by applying the optical interference signal to a low-pass filter or by directly converting the light to be measured into an electric signal through use of a second photodetector.

## BRIEF DESCRIPTION OF THE DRAWINGS

Fig. 1 is a block diagram for explaining the prior art;

Fig. 2 is a waveform diagram for explaining the waveform of an optical interference signal;

Fig. 3 is a waveform diagram showing an optical interference signal affected by optical power variations;

Fig. 4 is a block diagram illustrating an embodiment of the present invention;

Fig. 5 is a block diagram illustrating another embodiment of the present invention;

Fig. 6 is a block diagram illustrating another embodiment of the present invention; and

Fig. 7 is a block diagram illustrating still another embodiment of the present invention.

## DESCRIPTION OF THE PREFERRED EMBODIMENTS

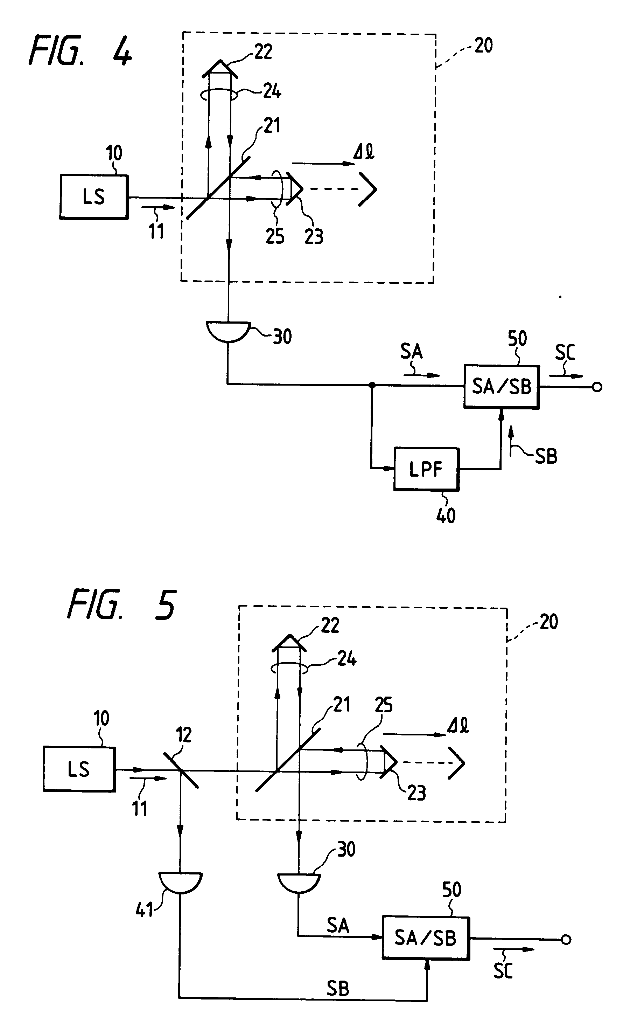

Fig. 4 illustrates in block form an embodiment of the present invention. In Fig. 4 the parts corresponding to those in Fig. 1 are identified by the same reference numerals, and since the arrangement of the optical interferometer 20, which is an optical system for measuring the light 11 from the light source 10, is exactly the same as shown in Fig. 1, no description will be given of the optical interferometer 20. In this embodiment, the optical interference signal SA from the photodetector 30 is branched to a low-pass filter 40, wherein a low-frequency component SB of the optical interference signal SA is extracted.

The low-frequency component SB of the optical interference signal SA is a DC-like optical power signal SB of the light 11 containing a low-frequency variation component. That is, where the light source 10 is being excited by the commercial power line, a noise of 50 or 60 Hz, or 100 or 120 Hz gets mixed in the optical interference signal SA. Also in the case of DC lighting, a fluctuation in the DC power source voltage bring about a low-frequency optical power variation. The optical power signal SB containing this optical power variation as a noise component is extracted by the low-pass filter 40 and is applied to an arithmetic unit 50.

The optical interference signal SA from the photodetector 30 is also provided to the arithmetic unit 50, wherein it is divided by the optical power signal SB, obtaining an optical interference signal SC with no noise component.

Letting the power level of the light 11 from the light source 10 be represented by $I_B$ and the wavelength of arbitrary light in the frequency band in which an analysis is made, for example, the center frequency, be represented by $\lambda_0$, the waveform of the optical interference signal SA at the power level $I_A$ shown in Fig. 2 can be given by the following expression:

$$I_A = I_B + I_B\gamma\cos 2\pi\frac{2\Delta\ell}{\lambda_0} \quad (1)$$

where $\gamma$ is referred to as coherency, which represents interference light components at wavelengths except $\lambda_0$ and varies with the distance of movement $\Delta\ell$ of the movable mirror 23. Further, $2\Delta\ell/\lambda_0$ is called a fringe frequency. In Fig. 4, letting the moving speed of the movable mirror 23 be represented by V, then $\Delta\ell = Vt$, so that Expression (1) can be expressed as follows:

$$I_A = I_B + I_B\gamma\cos 2\pi\frac{2\Delta\ell}{\lambda_0} = I_B + I_B\gamma\cos 2\pi f_F\cdot t \quad (2)$$

where $f_F$ represents the fundamental frequency of the optical interference signal SA, such as shown in Fig. 2, detected by the photodetector 30 while moving the movable mirror 23 at the speed V in Fig. 4, and this fundamental frequency may sometimes be called the fringe frequency. In practice, the moving speed of the movable mirror 23 is selected such that the fringe frequency $f_F$ is about 50 kHz, for instance.

The power $I_B$ of the light 11 emitted from the light source 10 fluctuates as mentioned previously in respect of Fig. 3, and letting its fluctuation component and DC component be represented by $\Delta I(t)$ and $I_0$, respectively, the power $I_B$ of the light 11 is expressed as follows:

$$I_B = I_0 + \Delta I(t) \quad (3)$$

The fluctuation component $\Delta I(t)$ modulates the amplitude of the optical interference signal as is evident from Expression (3), so that even if the frequency of the fluctuation component $\Delta I(t)$ (taken as $f_n$) is sufficiently lower than the fringe frequency $f_F$, spectra of $f_F \pm f_n$ and $f_F \pm 2f_n$, for example, appear as noise in the vicinity of the fringe frequency $f_F$ in the frequency band to be measured. Consequently, the waveform of the optical interference signal SA, which is actually detected by the photodetector 30, contains noise components as depicted in Fig. 3. In the embodiment shown in Fig. 4, the light power signal SB which is the input light 11, given by Expression (3), is extracted by the low-pass filter 40 from the optical interference signal SA which is the output of the photodetector 30, given by Expression (1), and the ratio SA/SB between the levels of the signals SA and SB is computed by the arithmetic unit 50. From Expressions (2) and (3) the level ratio SA/SB is expressed as follows:

$$SA/SB = I_A/I_B = 1 + \gamma\cos 2\pi f_F \cdot t \quad (4)$$

Since the output signal SC of the computing element 50 is free from the influence of the power fluctuation of the input light 11 as is evident from Expression (4), its waveform is substantially the same as that of the optical interference signal shown in Fig. 2 which is provided when the power of the input light 11 undergoes no fluctuation. Consequently, an accurate spectrum of the input light 11 can be obtained by a frequency analysis of the output signal SC of the arithmetic unit 50 through the fast Fourier transformation, for instance. In this embodiment, by selecting the cut-off frequency of the low-pass filter 40 to be lower than the band of the fringe frequency corresponding to the spectrum measuring band, all noises attributable to fluctuation components lower than the above-mentioned cut-off frequency can be removed from the optical interference signal SA.

Although in the Fig. 4 embodiment the optical power signal SB corresponding to the power of the incident light 11 is extracted by the low-pass filter 40 from the optical interference signal SA which is the output of the photodetector 30, the power of the light 11 from the light source 10 may also be detected directly as the optical power signal SB. An embodiment therefor is depicted in Fig. 5, in which the light 11 emitted from the light source 10 is split by a half mirror 12 into light which passes through the half mirror 12 and is then incident to the optical interferometer 20 and light which is reflected by the half mirror 12 and is then incident to a second photodetector 41. The power signal SB corresponding to the power of the light 11 is detected by the second photodetector 41 and is provided to the arithmetic unit 50 for the division SA/SB. The other parts of this embodiment are the same as those in the Fig. 4 embodiment and no description will be given of them for the sake of simplicity. According to the Fig. 5 embodiment, all noises attributable to fluctuation components in the entire frequency band contained in the light 11 can be removed from the optical interference signal SA.

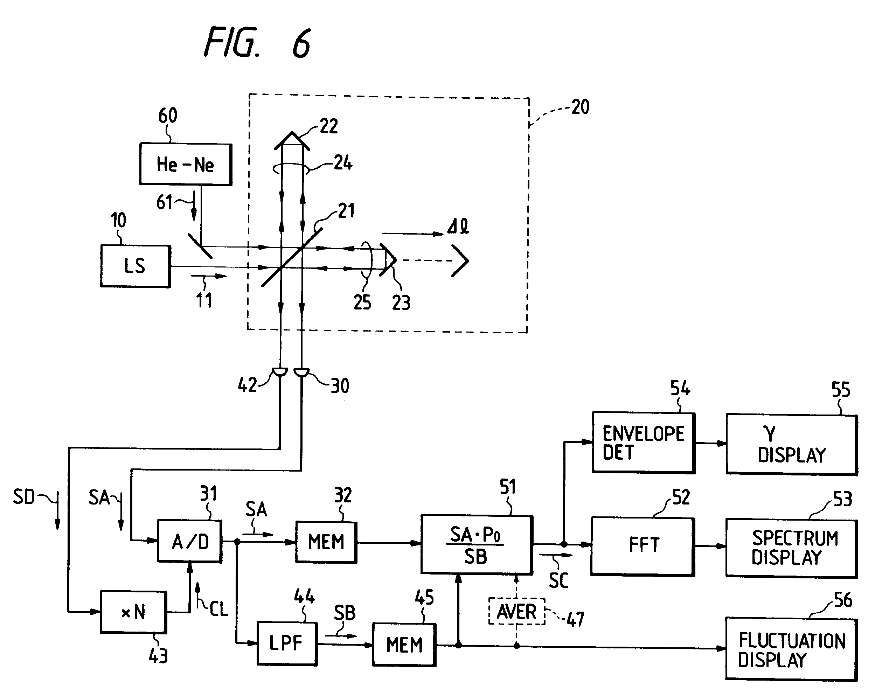

Fig. 6 illustrates a modified form of the embodiment shown in Fig. 4.

As described previously, the optical interference signal SA is obtained at the output of the photodetector 30 as the movable mirror 23 of the optical interferometer 20 moves at a constant speed, but if the moving speed of the movable mirror 23 varies, the fringe frequency of the optical interference signal SA also fluctuates accordingly and no accurate results of spectrum analysis can be obtained. In the embodiment shown in Fig. 6 reference light which has a line spectrum of a stable wavelength, such as laser light, is applied to the optical interferometer 20, together with the light to be measured, and a reference optical interference signal is derived from reference interference light which is emitted from the optical interferometer 20. The optical interference signal of the light to be measured is sampled by a clock of the fringe frequency of the reference optical interference signal or a frequency N times higher than the fringe frequency, by which samples of the optical interference signal corresponding to the distance of movement of the movable mirror 23 are successively generated without being affected by the variation in the moving speed of the movable mirror 23.

In this embodiment a reference light source 60 is provided in addition to the light source 10 and reference light 61 emitted from the reference light source 60 is applied to the optical interferometer 20, together with the light to be measured 11, as shown in Fig. 6. The reference light source 60 is one that is stable in wavelength and has a narrow spectrum characteristic, such as a He-Ne laser. In the optical interferometer 20 the reference light 61 is also split to the fixed optical path 24 and the variable optical path 25 and both rays of light therefrom are combined by the half mirror 21 into reference interference light, which is received by a photodetector 42 for conversion into an electric signal.

By using, as the reference light source 60, a light source which emits light of a stable wavelength and a narrow spectrum characteristic, the amplitude of a reference optical interference signal SD which is provided from the photodetector 42 varies sinusoidally with a constant period, i.e. a constant fringe frequency, with respect to the distance of movement $\Delta\ell$ of the movable mirror 23. In other words, the reference optical interference signal SD has a peak for each fixed distance of movement of the movable mirror 23. Where the moving speed of the movable mirror 23 changes, the position of the peak also changes correspondingly on the time axis. The reference optical interference signal SD is provided to an N-multiplier 43, from which an N-multiplied signal is applied as a sampling clock CL to an A-D converter 31, wherein the level of the optical interference signal SA of the light to be measured 11 from the photodetector 30 is converted to a digital value for each sampling clock CL. The value of N of the N-multiplier 43 is selected such that the frequency of the sampling clock CL is more than twice higher than the fringe frequency of the optical interference signal SA.

The sample data available from the A-D converter 31 is provided to a memory 32, in which sample data of one sweep of the movable mirror 23 is written in association with the sweep. The sample data from the A-D converter 31 is provided also to a digital low-pass filter 44, by which a low-frequency component containing the DC component and the fluctuation component of the power of the input light 11 is extracted as the optical power signal SB, and data about the optical power signal SB of one sweep of the movable mirror 23 is also written into a memory 45.

After completion of the write of the data of one sweep the data SA and SB are read out of the memories 32 and 45 and provided to an arithmetic unit 51, wherein the division SA/SB described above with regard to Fig. 4 is performed to obtain the optical interference signal data SC from which the fluctuation component has been removed. The data SC thus obtained may be subjected to, for example, a spectrum analysis by an FFT analyzer 52, by which the spectrum of the input light 11 can be obtained.

The optical interference signal SC obtained by the division SA/SB does not include the term of the power $I_B$ of the input light 11 as seen from Expression (4), and consequently, the spectral component obtained through frequency analysis of the result of the division SA/SB has been normalized by the power $I_B$ of the input light 11 and is unrelated to the power level of the input light 11. That is, if the spectrum distribution of the input light 11 remains unchanged, spectra of the same amplitudes are obtained irrespective of the magnitude of the power of the input light 11, and the results of analysis do not contain information about the power level of the input light 11. In the Fig. 6 embodiment, the arithmetic unit 51 multiplies the result of the division SA/SB by the power level $P_0$ of the input light 11 as a coefficient so as to obtain a spectrum of an amplitude proportional to the power of the input light 11. Consequently, the output data SC of the arithmetic unit 51 assumes a value proportional to the power level $P_0$ of the input light 11, and the amplitude of the spectrum obtained by the frequency analysis of the data SC becomes also proportional to the power level $P_0$. The coefficient $P_0$ that is used here is one of the data written in the memory 45, preferably, that data SB of a series of data stored in the memory 45 for one sweep which corresponds to the center position of the sweep. More preferably, the movable mirror 23 of the optical interferometer 20 is moved for a distance from $-\Delta\ell$ to $+\Delta\ell$ in terms of the optical path difference between the fixed and movable optical paths 24 and 25, and the optical power data SB at an address corresponding to the vicinity of the position where the optical path difference is zero is read out of the memory 45 and is used as the coefficient $P_0$. Still more preferably, the optical power data SB in a predetermined number of periods before and after the position of zero optical path difference are read out of the memory 45 and averaged by an averager 47 indicated by the broken line in Fig. 6, and the resulting average is used as the coefficient $P_0$. In this instance, the coefficient $P_0$ is less affected by the fluctuation component contained in the optical power.

The computing element 51 outputs the optical interference signal SC from which the noise component has been removed. By a frequency analysis of the optical interference signal SC with the frequency analyzer 52, the optical spectrum of the light 11 to be measured can be displayed on a display 53. Moreover, an envelope detector 54 is provided, by which a variation in the amplitude of the optical interference signal SC, that is, the coherency $\gamma$ in Expression (4), is detected. By displaying the coherency $\gamma$ on a display 55 with the optical path difference $\Delta\ell$ represented on the abscissa, the coherency of the light 11 being measured can be displayed. Besides, fluctuations of the light 11 can be observed by displaying on a display 56 the optical power signal data SB read out of the memory 45.

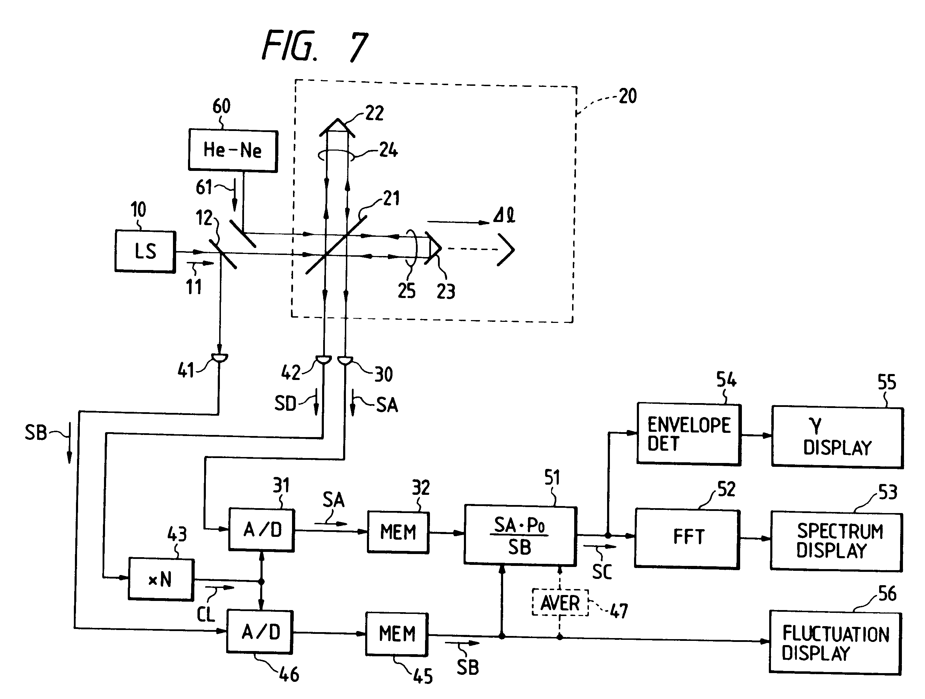

Fig. 7 illustrates another modification of the Fig. 4 embodiment, in which the method of employing the reference light 61 is applied to the Fig. 5 embodiment as is the case with the Fig. 6 embodiment. In Fig. 7 the parts corresponding to those in Figs. 5 and 6 are identified by the same reference numerals and characters. As depicted in Fig. 7, a portion of the light 11 emitted from the light source 10 is reflected by the half mirror 12 to the photodetector 41, wherein the power of the light 11 is converted to the electric signal SB, which is applied to an A-D converter 46. The A-D converter 46 converts the level of the optical power signal SB into a digital value upon each application thereto of the sampling clock CL derived by the N-multiplier 43 from the optical interference signal SD of the reference light 61. The output data of the A-D converter 46 is written into the memory 45 in association with the sweep of the movable mirror 23. The construction and the operation of this embodiment are identical with the Fig. 6 embodiment, and hence no further description will be repeated.

As described above, according to the present invention, even if the optical power of the light to be measured 11 fluctuates, an optical interference signal free from the fluctuation component can be obtained.

It will be apparent that many modifications and variations may be effected without departing from the scope of the novel concepts of the present invention.

## Claims

1. An optical interference signal extractor comprising:

an optical interferometer (20) which receives light to be measured and which outputs interference light of said light to be measured, and in which an optical path difference is sweepable;

and

optical interferometer signal generating means (30) which receives said interference light incident from said optical interferometer and outputs a first optical interference signal which is an electric signal corresponding to the intensity of said interference light; characterized by

optical power signal extracting means (40; 41) for generating an optical power signal corresponding to the power of said light to be measured; and

arithmetic means (50) for dividing said first optical interference signal from said optical interference signal generating means by said optical power signal from said optical power signal extracting means and for outputting the result of said division as a second optical interference signal.

2. The optical interference signal extractor of claim 1 wherein said optical power signal extracting means includes a low-pass filter (40) connected to said optical interference signal generating means (30) and has a predetermined cut-off frequency.

3. The optical interference signal extractor of claim 1 wherein said optical signal extracting means includes a photodetector (41) which receives a portion of said light to be measured and detects and outputs its power as said optical power signal.

4. The optical interference signal extractor of claim 1 wherein said optical interference signal generating means includes: a first photodetector (30) which receives and converts said interference light to an electric signal; an A-D converte (31) which converts the output of said first photodetector to a digital signal and outputs it as said first optical interference signal; a reference light source (60) for emitting reference light of a narrow spectrum which is applied to said optical interferometer (20), together with said light to be measured; a second photodetector (42) for converting reference interference light emitted from said optical interferometer into an electric signal in accordance with said reference light; and a multiplier (43) which multiplies the frequency of the output signal of said second photodetector to a desired frequency and applies the multiplied output as a sampling clock to said A-D converter; and wherein said optical power signal extracting means includes a digital low-pass filter (44) which is supplied with the output of said A-D converter and has a predetermined cut-off frequency for extracting said optical power signal in digital form.

5. The optical interference signal extractor of claim 4 wherein said arithmetic means includes: a first memory (32) for storing said first optical interference signal output from said A-D converter (31); a second memory (45) for storing said optical power signal output from said digital low-pass filter (44); and dividing means (51) supplied with said first optical interference signal and said optical power signal read out of said first and second memories, for dividing said first optical interference signal by said optical power signal.

6. The optical interference signal extractor of claim 1 wherein said optical interference signal generating means includes: a first photodetector (30) which receives and converts said interference light into an electric signal: a first A-D converter (31) for converting the output of said first photodetector into a digital signal for output as said first optical interference signal; a reference light source (60) for emitting reference light of a narrow spectrum which is applied to said optical interferometer (20), together with said light to be measured; a second photodetector (42) for converting reference interference light emitted from said optical interferometer into an electric signal in accordance with said reference light; and a multiplier (43) which multiplies the frequency of the output signal of said second photodetector to a desired frequency and applies the multiplied output as a sampling clock to said first A-D converter; and wherein said optical power signal extracting means includes: a third photodetector (41) which receives a portion of said light to be measured, detects its power and outputs the detected power as said optical power signal; and a second A-D converter (46) connected to the output of said third photodetector, for converting said optical power signal into a digital optical power signal upon each application of said sampling clock from said multiplier.

7. The optical interference signal extractor of claim 6 wherein said arithmetic means includes: a first memory (32) for storing said first optical interference signal output from said first A-D converter; a second memory (45) for storing said optical power signal output from said second A-D converter; and dividing means (51) supplied with said first optical interference signal and said optical power signal read out of said first and second memories, for dividing said first optical interference signal by said optical power signal.

8. The optical interference signal extractor of claim 5 or 7 wherein said arithmetic means includes multiplying means (51) whereby the divided output of said dividing means (51) is multiplied by one of sample data of said optical power signal read out of said second memory (45), as a constant coefficient, the multiplied output of said multiplying means being output as said second optical interference signal.

9. The optical interference signal extractor of claim 5 or 7 wherein said arithmetic means includes: averaging means (47) for averaging a plurality of sample data of said optical power signal read out of said second memory (45) and providing the averaged output as a constant coefficient; and multiplying means (51) for multiplying said constant coefficient and said divided output of said dividing means and providing the multiplied output as said second optical interference signal.

10. The optical interference signal extractor of claim 2, 4 or 5 wherein the cut-off frequency of said low-pass filter (40;44) is lower than a frequency band for measuring said optical interference signal corresponding to a wavelength region for measuring said light to be measured.

**Patentansprüche**

1. Trennanordnung für ein optisches Interferenzsignal, umfassend,

ein optisches Interferometer (20), das zu messendes Licht empfängt und das Interferenzlicht des zu messenden Lichts ausgibt, und bei dem eine optische Wegdifferenz wobbelbar ist,

eine optische Interferenzsignalgeneratoranordnung (30), die das von dem optischen Interferometer einfallende Interferenzlicht empfängt und ein erstes optisches Interferenzsignal ausgibt, bei dem es sich um ein elektrisches Signal handelt, das der Intensität des Interferenzlichts entspricht,

**gekennzeichnet durch**

eine optische Leistungssignaltrennanordnung (40; 41) zur Erzeugung eines optischen Leistungssignals entsprechend der Leistung des zu messenden Lichts; und

eine Rechenanordnung (50) zum Teilen des ersten optischen Interferenzsignals von der optischen Interferenzsignalgeneratoranordnung durch das optische Leistungssignal von der optischen Leistungssignaltrennanordnung und zur Ausgabe des Ergebnisses der Teilung als eines zweiten optischen Interferenzsignals.

2. Trennanordnung für ein optisches Interferenzsignal nach Anspruch 1, bei der die optische Leistungssignaltrennanordnung ein Tiefpaßfilter (40) enthält, das mit der optischen Interferenzsignalgeneratoranordnung (30) verbunden ist und eine vorbestimmte Grenzfrequenz aufweist.

3. Trennanordnung für ein optisches Interferenzsignal nach Anspruch 1, bei der die optische Signaltrennanordnung einen Photodetektor (41) enthält, der einen Teil des zu messenden Lichts empfängt und dessen Leistung erfaßt und als das optische Leistungssignal ausgibt.

4. Trennanordnung für ein optisches Interferenzsignal nach Anspruch 1, bei der die optische Interferenzsignalgeneratoranordnung enthält: einen ersten Photodetektor (30), der das Interferenzlicht empfängt und es in ein elektrisches Signal umsetzt; einen A/D-Umsetzer (31), der das Ausgangssignal des ersten Photodetektors in ein digitales Signal umsetzt und es als das erste optische Interferenzsignal ausgibt; eine Referenzlichtquelle (60) zur Abgabe von Referenzlicht eines schmalen Spektrums, das dem optischen Interferometer (20) zusammen mit dem zu messenden Licht zugeführt wird; einen zweiten Photodetektor (42) zum Umsetzen von Referenzinterferenzlicht, das von dem optischen Interferometer abgestrahlt wird, in ein elektrisches Signal entsprechend dem Referenzlicht; und einen Vervielfacher (43) der die Frequenz des Ausgangssignals des zweiten Photodetektors zu einer gewünschten Frequenz vervielfacht und das vervielfachte Ausgangssignal als einen Abtasttakt an den A/D-Umsetzer anlegt; und bei der die optische Leistungssignaltrennanordnung ein digitales Tiefpaßfilter (44) enthält, das mit der Ausgabe des A/D-Umsetzers beliefert wird und eine vorbestimmte Grenzfrequenz zur Abtrennung des optischen Leistungssignals in digitaler Form aufweist.

5. Trennanordnung für ein optisches Interferenzsignal nach Anspruch 4, bei der die Rechenanordnung enthält: einen ersten Speicher (32) zur Speicherung des ersten optischen Interferenzsignals, das von dem A/D-Umsetzer (31) ausgegeben wird; einen zweiten Speicher (45) zur Speicherung des optischen Leistungssignals, das von dem digitalen Tiefpaßfilter (44) ausgegeben wird; und eine Teilungsanordnung (51), der das erste optische Interferenzsignal und das optische Leistungssignal, die von dem ersten und dem zweiten Speicher ausgelesen werden, geliefert werden, damit das erste optische Interferenzsignal durch das optische Leistungssignal geteilt wird.

6. Trennanordnung für ein optisches Interferenzsignal nach Anspruch 1, bei der die optische Interferenzsignalgeneratoranordnung enthält: einen ersten Photodetektor (30), der das Interferenzlicht empfängt und es in ein elektrisches Signal umsetzt; einen ersten A/D-Umsetzer (31) zum Umsetzen des Ausgangssignals des ersten Photodetektors in ein digitales Signal zur Ausgabe als das erste optische Interferenzsignal; eine Referenzlichtquelle (60) zur Ausgabe von Referenzlicht eines schmalen Spektrums, das zusammen mit dem zu messenden Licht dem optischen Interferometer (20) zugeführt wird; einen zweiten Photodetektor (42) zum Umwandeln des von dem optischen Interferometer ausgehenden Referenzinterferenzlichts in ein elektrisches Signal entsprechend dem Referenzlicht; und einen Vervielfacher (43), der die Frequenz des Ausgangssignals des zweiten Photodetektors zu einer gewünschten Frequenz vervielfacht und das vervielfachte Ausgangssignal als einen Abtasttakt an den ersten A/D-Umsetzer anlegt; und bei der die optische Leistungssignaltrennanordnung enthält: einen dritten Photodetektor (41), der einen Teil des zu messenden Lichts empfängt, dessen Leistung erfaßt und die erfaßte Leistung als das optische Leistungssignal ausgibt; und einen zweiten A/D-Umsetzer (46), der mit dem Ausgang des dritten Photodetektors verbunden ist, um das optische Leistungssignal in ein digitales optisches Leistungssignal umzusetzen, und zwar bei jedem Anlegen des Abtasttakts von dem Vervielfacher.

7. Trennanordnung für ein optisches Interferenzsignal nach Anspruch 6, bei der die Recheneinheit enthält: einen ersten Speicher 32, zum Speichern des ersten optischen Interferenzsignals, das von dem ersten A/D-Umsetzer ausgegeben wird; einen zweiten Speicher (45) zum Speichern des optischen Leistungssignals, das von dem zweiten A/D-Umsetzer ausgegeben wird; und eine Teilungsanordnung (51), der das erste optische Interferenzsignal und das optische Leistungssignal, die von dem ersten und dem zweiten Speicher ausgelesen werden, geliefert werden, damit das erste optische Interferenzsignal durch das optische Leistungssignal geteilt wird.

8. Trennanordnung für ein optisches Interferenzsignal nach Anspruch 5 oder 7, bei der die Rechenanordnung eine Multiplizieranordnung (51) enthält, durch die das geteilte Ausgangssignal der Teilungsanordnung (51) mit einem der aus dem zweiten Speicher (45) ausgelesenen Abtastdaten des optischen Leistungssignals als einem konstanten Koeffizienten multipliziert wird, wobei das multiplizierte Ausgangssignal der Multiplizieranordnung als das zweite optische Interferenzsignal ausgegeben wird.

9. Trennanordnung für ein optisches Interferenzsignal nach Anspruch 5 oder 7, bei der die Rechenanordnung enthält: eine Mittelwertbildungsanordnung (47) zur Mittelwertbildung einer Vielzahl von aus dem zweiten Speicher (45) ausgelesenen Abtastdaten des optischen Leistungssignal und zur Lieferung der gemittelten Ausgabe als eines konstanten Koeffizienten; und eine Multiplizieranordnung (51) zum Multiplizieren des konstanten Koeffizienten und der geteilten Ausgabe der Teilungsanordnung und zur Lieferung der multiplizierten Ausgabe als das zweite optische Interferenzsignal.

10. Trennanordnung für ein optisches Interferenzsignal nach Anspruch 2, 4 oder 5, bei der die Grenzfrequenz des Tiefpaßfilters (40; 44) niedriger ist, als ein Frequenzband zum Messen des optischen Interferenzsignals entsprechend einem Wellenlängenbereich zur Messung des zu messenden Lichts.

**Revendications**

1. Extracteur de signal d'interférence optique comprenant :

un interféromètre optique (20) qui reçoit de la lumière à mesurer et qui sort de la lumière d'interférence de ladite lumière à mesurer, et dans lequel une différence de trajet optique peut être balayée ; et,

un moyen générateur de signaux d'interférence optique (30) qui reçoit ladite lumière d'interférence incidente issue dudit interféromètre optique et qui sort un premier signal d'interférence optique qui est un signal électrique correspondant à l'intensité de ladite lumière d'interférence ; caractérisé par :

un moyen d'extraction de signal de puissance optique (40 ; 41) pour produire un signal de puissance optique correspondant à la puissance de ladite lumière à mesurer ; et,

un moyen arithmétique (50) pour diviser ledit premier signal d'interférence optique issu dudit moyen générateur de signaux d'interférence optique par ledit signal de puissance optique issu dudit moyen d'extraction de signal de puissance optique et pour sortir le résultat de ladite division sous forme d'un second signal d'interférence optique.

2. Extracteur de signal d'interférence optique selon la revendication 1, dans lequel ledit moyen d'extraction de signal de puissance optique comprend un filtre passe-bas (40) connecté audit moyen générateur de signaux d'interférence optique (30) et qui a une fréquence de coupure prédéterminée.

3. Extracteur de signal d'interférence optique selon la revendication 1, dans lequel ledit moyen d'extraction de signal optique comprend un photodétecteur (41) qui reçoit une partie de ladite lumière à mesurer et qui détecte et qui sort sa puissance sous forme dudit signal de puissance optique.

4. Extracteur de signal d'interférence optique selon la revendication 1, dans lequel ledit moyen générateur de signaux d'interférence optique comprend un premier photodétecteur (30) qui reçoit et qui convertit ladite lumière d'interférence en un signal électrique ; un convertisseur A/D (d'analogique en numérique) (31) qui convertit la sortie dudit premier photodétecteur en un signal numérique et qui la sort sous forme dudit premier signal d'interférence optique ; une source de lumière de référence (60) pour émettre une lumière de référence d'un spectre étroit qui est appliquée audit interféromètre optique (20), en même temps que ladite lumière à mesurer ; un second photodétecteur (42) pour convertir ladite lumière d'interférence de référence émise par ledit interféromètre optique en un signal électrique en fonction de ladite lumière de référence ; et un multiplieur (43) qui multiplie la fréquence du signal de sortie dudit second photodétecteur jusqu'à une fréquence souhaitée et qui applique la sortie multipliée, comme signal d'horloge d'échantillonnage, audit convertisseur A/D ; et dans lequel ledit moyen d'extraction de signal de puissance optique comprend un filtre passe-bas numérique (44), qui est alimenté avec la sortie dudit convertisseur A/D et qui a une fréquence de coupure prédéterminée, pour extraire ledit signal de puissance optique sous forme numérique.

5. Extracteur de signal d'interférence optique selon la revendication 4, dans lequel ledit moyen arithmétique comprend : une première mémoire (32) pour mémoriser ledit premier signal d'interférence optique sorti dudit convertisseur A/D (31) ; une seconde mémoire (45) pour mémoriser ledit signal de puissance optique sorti dudit filtre passe-bas numérique (44) ; et un moyen diviseur (51) alimenté avec ledit premier signal d'interférence optique et ledit signal de puissance optique, lus dans lesdites première et seconde mémoires, pour diviser ledit premier signal d'interférence optique par ledit signal de puissance optique.

6. Extracteur de signal d'interférence optique selon la revendication 1, dans lequel ledit moyen générateur de signaux d'interférence optique comprend un premier photodétecteur (30) qui reçoit et qui convertit ladite lumière d'interférence en un signal électrique ; un premier convertisseur A/D (31) pour convertir la sortie dudit premier photodétecteur en un signal numérique pour sortie sous forme dudit premier signal d'interférence optique ; une source de lumière de référence (60) pour émettre une lumière de référence d'un spectre étroit qui est appliquée audit interféromètre optique (20), en même temps que ladite lumière à mesurer ; un second photodétecteur (42) pour convertir ladite lumière d'interférence de référence émise par ledit interféromètre optique en un signal électrique en fonction de ladite lumière de référence ; et un multiplieur (43) qui multiplie la fréquence du signal de sortie dudit second photodétecteur jusqu'à une fréquence souhaitée et qui applique la sortie multipliée, comme signal d'horloge d'échantillonnage, audit premier convertisseur A/D ; et dans lequel ledit moyen d'extraction de signal de puissance optique comprend : un troisième photodétecteur (41) qui reçoit une partie de ladite lumière à mesurer, qui détecte sa puissance et qui sort la puissance détectée comme signal de puissance optique ; et un second convertisseur A/D (46) connecté à la sortie dudit troisième photodétecteur, pour convertir ledit signal de puissance optique en un signal de puissance optique numérique lors de chaque application dudit signal d'horloge d'échantillonnage issu dudit multiplieur.

7. Extracteur de signal d'interférence optique selon la revendication 6, dans lequel ledit moyen arithmétique comprend : une première mémoire (32) pour mémoriser ledit premier signal d'interférence optique sorti dudit premier convertisseur A/D ; une seconde mémoire (45) pour mémoriser ledit signal de puissance optique sorti dudit second convertisseur A/D ; et un moyen diviseur (51) alimenté avec ledit premier signal d'interférence optique et ledit signal de puissance optique, lus dans lesdites première et seconde mémoires, pour diviser ledit premier signal d'interférence optique par ledit signal de puissance optique.

8. Extracteur de signal d'interférence optique selon la revendication 5 ou 7, dans lequel ledit moyen arithmétique comprend un moyen multiplicateur (51) par lequel la sortie divisée dudit moyen de division (51) est multipliée par l'une des données échantillons dudit signal de puissance optique lue dans ladite seconde mémoire (45), en tant que coefficient constant, la sortie multipliée dudit moyen multiplicateur étant sortie comme second signal d'interférence optique.

9. Extracteur de signal d'interférence optique selon la revendication 5 ou 7, dans lequel ledit moyen arithmétique comprend un moyen : un moyen de calcul de moyenne (47) pour faire la moyenne d'une pluralité de données échantillons dudit signal de puissance optique lues dans ladite seconde mémoire (45) et pour délivrer, comme coefficient constant, la sortie dont il est fait la moyenne ; et un moyen multiplicateur (51) pour multiplier ledit coefficient constant et ladite sortie divisée dudit moyen diviseur et pour délivrer la sortie multipliée comme second signal d'interférence optique.

10. Extracteur de signal d'interférence optique selon la revendication 2, 4, ou 5, dans lequel la fréquence de coupure dudit filtre passe-bas (40 ; 44) est inférieure à une bande de fréquences pour mesurer ledit signal d'interférence optique correspondant à une région de longueur d'onde pour mesurer ladite lumière à mesurer.

## FIG. 1 PRIOR ART

## FIG. 2 PRIOR ART

## FIG. 3 PRIOR ART

FIG. 4

FIG. 5

FIG. 6

EP 0 436 752 B1

FIG. 7

FIG. 7

EP 0 436 752 B1